# EUROPÄISCHE PATENTSCHRIFT

(11) **EP 0 532 724 B1**
(45) Veröffentlichungstag und Bekanntmachung des Hinweises auf die Patenterteilung: **08.05.1996**
(21) Anmeldenummer: 92906985.4
(22) Anmeldetag: 27.03.1992
(51) Int. Cl.: G05D 23/19, G04G 15/00

(54) **ELEKTRONISCHE THERMOSTATSCHALTUHR**
ELECTRONIC THERMOSTAT SWITCH CLOCK
MINUTERIE ELECTRONIQUE POUR THERMOSTATS

(30) Priorität: 06.04.1991 DE 9104170 U
(43) Veröffentlichungstag der Anmeldung: 24.03.1993
(73) Patentinhaber: GRÄSSLIN KG, D-78112 St. Georgen (DE)
(72) Erfinder: SCHWER, Thomas, D-7740 Triberg (DE); MAIER, Bernd, D-7742 St. Georgen (DE)
(74) Vertreter: Thoma, Friedrich, Dipl.-Ing.(FH)
(86) Internationale Anmeldenummer: DE9200257
(87) Internationale Veröffentlichungsnummer: WO9217831

(56) Entgegenhaltungen:
- EP-A- 0 176 617
- DE-A- 2 916 748
- DE-U- 9 003 507
- GB-A- 1 264 870
- US-A- 3 867 642
- US-A- 4 252 270

## Beschreibung

Die Erfindung betrifft eine elektronische Thermostatschaltuhr mit den Merkmalen nach dem Oberbegriff des Patentanspruch 1.

Bei derartigen Thermostatschaltuhren, die zweckmäßigerweise nicht nur für eine zeitgesteuerte Wohnraumtemperaturregelung, sondern auch für Klimaanlagen mit Heiz- und/oder Kühl funktion, für Kühltruhen, Kältekammern und Kühlschränke, insbesondere auch als sogenannte Abtauregler zum Einsatz kommen, insbesondere wenn diese für eine Einbaumontage vorgesehen sind, ist es erforderlich, daß die äußeren Abmessungen des Gesamtgerätes möglichst klein und kompakt sind, ohne daß die technischen Anforderungen an den Thermostaten hierdurch beeinträchtigt werden. Dabei soll sichergestellt sein, daß die Trägheit eines derartigen Thermostaten den jeweiligen Erfordernissen entsprechend angepaßt ist. Außerdem sollen dort erforderlichenfalls sogenannte Optimierungsfunktionen mit bis zu vier Temperaturniveaus, 1. mit einer Komforttemperaturregelung bei 21°C, 2. einer zeitgesteuert abgesenkten Tagtemperaturregelung bei ca. 19°C, 3. einer zeitgesteuert abgesenkten Nachttemperaturregelung bei ca. 16°C und 4. eine Frostschutztemperaturregelung bei ca. 5°C, sowie mit einer sogenannten Stoßlüftungsautomatik, möglich sein.

Außerdem ist es bei derartigen Thermostatschaltuhren erforderlich, daß einerseits die elektrischen Installationsanschlüsse den jeweiligen zweckmäßigen Anforderungen entsprechend gelegt werden können, ohne daß hierdurch die Einbaulage des Gerätes verändert werden muß, und daß andererseits neben einer Gerätegangreserveüberwachung auch eine, den jeweiligen Erfordernissen entsprechende Anordnung des Temperaturfühlers möglich ist.

Bei den bekanntgewordenen elektromechanischen oder elektronischen Thermostatschaltuhren sind die Schaltuhr und der Thermostat räumlich nebeneinanderliegend, in einem rechteckig ausgebildeten, räumlich relativ großen Gehäuse angeordnet. Die elektrischen Installationsanschlüsse sind dort räumlich unveränderlich in einem bestimmten Bereich des Gehäuses angeordnet. Außerdem sind diese bekannten Thermostatschaltuhren räumlich relativ groß und in der Anwendung dementsprechend begrenzt einsetzbar.

Aus der DE-U-90 03 507.0 ist eine Elektromechanische oder elektronische Zeitschaltuhr mit einer Einrichtung zum Programmieren und zum Anzeigen/ Ablesen der Schaltzeiten, mit einer elektrischen Kontaktschalteinrichtung, in einem Gehäuse mit einer Montagevorrichtung zum Aufrasten auf Verteilerschienen, und bei der die Einrichtung zum Programmieren und zum Anzeigen/Ablesen der Schaltzeiten als Modul ausgebildet ist und das im Bereich der Gehäuseoberseite aus dem Verteilergehäuse herausziehbar angeordnet und gelagert ist. Diese Zeitschaltuhr ist aufgrund ihrer gehäuserückseitigen Montagevorrichtung für den vorgesehenen Zweck völlig ungeeignet.

Außerdem ist aus der DE-A-2 916 748 ein Steuer- und/oder Regelgerät für Heizungs- Klimatisierungs- bzw. Warmwasseranlagen, mit einstellbaren Steuereinheiten die Umwälzpumpen, Thermostate, Anzeigeinstrumente, Einstellorgane usw. aufweisen, das als einstückiges Gehäuse oder Montageplatte ausgebildet ist, und das eine Vielzahl von fest vorgegebenen Aufnahmeplätzen zur Halterung der modulartig ausgebildeten Steuereinheiten für die Heizungs-, Klimatisierungs- und/oder Warmwasser-Bereitungsanlagen sowie einen einstellbaren modulartigen Steuerbaustein zur Ansteuerung der Steuereinheiten aufweist. Auch dieses große und technisch äußerst umfangreiche Gerät ist für den vorgesehenen Zweck völlig ungeeignet.

Der Erfindung liegt die Aufgabe zugrunde, die Nachteile der bekannten Thermostatschaltuhren zu beseitigen und ein Gerät der eingangsgenannten Art zu schaffen, das möglichst kleine Gehäuseabmessungen aufweist, eine zweckmäßig ausrichtbare Lage der Installationsanschlüsse ermöglicht und hinsichtlich der Anordnung des Temperaturfühlers flexibel ist. Außerdem soll dort eine Anzeige der Isttemperatur und der Gangreserve der Zeitschaltuhr gesichert sein.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei der neuen Thermostatschaltuhr ist nicht nur, daß bei einem Gehäuse mit einem quadratischen Querschnitt, insbesondere mit einem Kantenmaß von 60 x 60 mm, auf der Rückseite des Gehäuses ein Thermostatmodul angeordnet ist, sondern auch, daß die auf der Vorderseite des Gehäuses angeordnete Zifferblattscheibe mit einer optoelektronischen Anzeigevorrichtung für die Uhrzeit, die Schaltzeiten und die Schalttemperatur, sowie mit einer Eingabe-Tastatur für die Uhrzeit, die Schaltzeiten und die Schalttemperatur, gegenüber dem Gehäuse und/ oder den Installationsanschlüssen, die an einer der Seiten des Gehäuses angeordnet sind, insbesondere in einem Raster von ca. 90° verdrehbar gelagert ist. Vorteilhaft ist ferner, daß die Gangreserve der Thermostatschaltuhr an der optoelektronischen Anzeigevorrichtung auf der Zifferblattscheibe angezeigt wird.

Ein Ausführungsbeispiel der neuen Thermostatschaltuhr ist in den Zeichnungen dargestellt und wird im folgenden näher erläutert. Es zeigen
Fig. 1 Eine Vorderansicht auf die Thermostatschaltuhr,
Fig. 2 eine Seitenansicht auf die Thermostatschaltuhr nach Fig. 1 und
Fig. 3 eine Rückansicht auf die Thermostatschaltuhr nach Fig. 1.

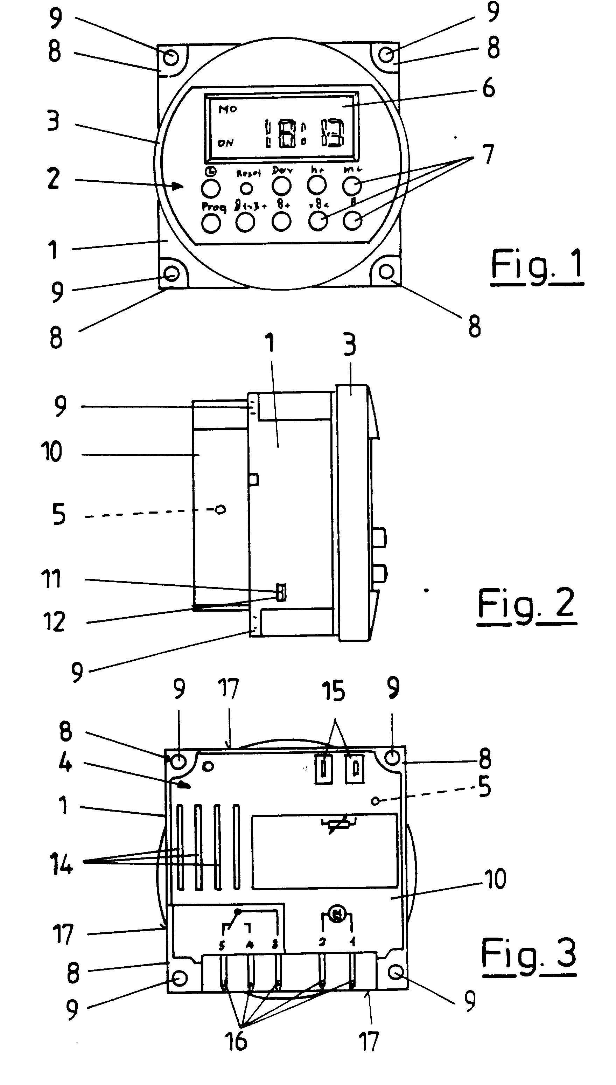

Die, in der Fig. 1, dargestellte Thermostatschaltuhr besteht im wesentlichen aus dem Gehäuse 1 mit einem quadratischen Querschnitt, insbesondere mit den Kantenmaßen 60 x 60 mm. Auf der Vorderseite 2 der zylindrischen Ziffenblattscheibe 3, welche räumlich erhaben auf dem Gehäuse 1 angeordnet und gegenüber diesem, insbesondere im Raster von 90° verdrehbar gelagert ist, ist eine optoelektronische Anzeigevorrichtung 6 zur digitalen Anzeige der Uhrzeit, der Schaltzeiten, der Schalttemperaturen, sowie der Isttemperatur vorgesehen. Außerdem befinden sich dort optoelektronische Anzeigemittel, inform elektronisch angeregter symbolisierter Segmente für die Anzeige der jeweiligen Schaltzustände, der Schalttage, sowie der Gangreserve des Gerätes.

7 kennzeichnet eine Tastatur zur manuellen Eingabe der Uhrzeit, der Schaltzeiten; im einzelnen zur Eingabe der Komforttemperatur, der Tagesabsenkung, der Nachtabsenkung, des Frostschutzes, der Abtaudauer, der Abtaustartzeit, etwaiger Sperrzeiten, sowie der Schalttemperaturen. 8 zeigt Montagebefestigungsflansche mit Befestigungslöchern 9, die im Bereich der Ecken des Gehäuses 1 angeordnet sind.

In der Fig. 2 bedeutet 1 das Gehäuse, 3 die gehäusevorderseitige Zifferblattscheibe und 5 das gehäuserückseitig angeordnete Thermostatmodul das dort von einem Gehäusedeckel 10 abgedeckt ist. Der Gehäusedeckel 10 ist mittels Rastklinken 11 auf das Gehäuse 1 lösbar aufgerastet. 12 bezeichnet einen Rasteingriff im Gehäuse 1. 8 kennzeichnet die Montagebefestigungsflansche am Gehäuse 1. Die Zifferblattscheibe 3 kann rückseitig mit einer modular aufgebauten elektronischen, zeithaltenden Schalteinrichtung versehen sein. Wie bereits in der Fig. 1 beschrieben, ist die Zifferblattscheibe 3, zusammen mit diesem zeithaltenden Schaltmodul zum Gehäuse 1 und den dort vorgesehenen elektrischen Installationsanschlüssen, insbesondere rastend, verdrehbar gelagert.

Die Fig. 3 zeigt im einzelnen das Gehäuse 1 mit dem dort auf der Rückseite 4 aufgesetzten Thermostatmodul 5, der von einem Gehäusedeckel 10 abgedeckt ist. In Sonderfällen kann der Thermostatmodul 5 auch ohne Gehäusedeckel 10, unmittelbar, auf der Rückseite 4 des Gehäuses 1 angeordnet sein. 14 bezeichnet einige Deckeldurchbrüche hinter denen der geräteintegrierte, nicht näher dargestellte, Temperaturfühler angeordnet ist. 15 kennzeichnet einen zweipoligen Stecker, für den Anschluß eines Ferntemperaturfühlers des elektronischen Thermostaten.

16 bezeichnet die steckerförmigen elektrischen Installationsanschlüsse die teilweise im Gehäuse 1 versenkt gehäuseaußenseitig im Bereich einer der Seiten 17 des Gehäuses 1 angeordnet sind. 8 zeigt Montagebefestigungsflansche und 9 die dort vorgesehenen Befestigungslöcher.

## Patentansprüche

1. Elektronische Thermostatschaltuhr mit einer zeithaltenden Schalteinrichtung und mit einem Thermostatmodul (5), in einem, mit einem quadratischen Querschnitt insbesondere mit den Kantenmaßen 60 x 60 mm versehenen Gehäuse (1), auf dessen Vorderseite (2) eine zylindrische Zifferblattscheibe (3) mit einer optoelektronischen Anzeigevorrichtung (6) für die Uhrzeit, die Schaltzeiten und die Schalttemperatur, sowie mit einer Eingabe-Tastatur (7) für die Uhrzeit, die Schaltzeiten und die Schalttemperatur, angeordnet ist, **dadurch gekennzeichnet,** daß auf der Rückseite (6) des Gehäuses (1) das Thermostatmodul (5) angeordnet ist, und daß die Zifferblattscheibe (3) gegenüber dem Gehäuse (1) und/oder den Installationsanschlüssen (16) an einer der Seiten (17) des Gehhäuses (1), insbesondere in einem Raster von ca. 90°, verdrehbar gelagert ist.

2. Thermostatschaltuhr nach Anspruch 1, dadurch gekennzeichnet, daß die Zifferblattscheibe (3) rastend verdrehbar gelagert und befestigt ist.

3. Thermostatschaltuhr nach Anspruch 1 und 2, dadurch gekennzeichnet, daß die Gangreserve der Thermostatschaltuhr an der Anzeigevorrichtung (6) angezeigt wird.

## Claims

1. Electronic thermostat switch clock with a time-keeping switching device and with a thermostat module (5) in a housing (1) provided with a square cross-section in particular with the edge dimensions 60 x 60 mm and on whose front side (2) is disposed a cylindrical dial (3) with an optoelectronic display (6) for the time of the day, the switching times and the switching temperature, and with input keys (7) for the time of the day, the switching times and the switching temperature, characterised in that the thermostat module (5) is disposed on the rear side (6) of the housing (1) and in that the dial (3) is mounted rotatable relative to the housing (1) and/or the installation connections (16) on one of the sides (17) of the housing (1), in particular through approx. 90°.

2. Thermostat switch clock according to claim 1, characterised in that the dial (3) is mounted and fixed so that it can rotate and lock.

3. Thermostat switch clock according to claim 1 and 2, characterised in that the operating reserve of the thermostat switch clock is indicated on the display (6).

## Revendications

1. Minuterie électronique thermostatique, comportant un temporisateur et un module à thermostat (5), à l'intérieur d'un boîtier (1) présentant une section transversale carrée, en particulier des dimensions extérieures de 60 x 60 mm, sur la face antérieure (2) duquel est disposé un cadran numérique (3) cylindrique qui présente un dispositif d'affichage opto-électronique (6) de l'heure, des temps programmés et de la température programmée, la minuterie comportant également un clavier de programmation (7) de l'heure, des temps programmés et de la température programmée, caractérisée en ce que sur la face arrière (6) du boîtier (1) est disposé le module thermostatique (5), et en ce que le cadran numérique (3) est monté de manière rotative par rapport au boîtier (1) et/ou par rapport aux connexions d'installation (16) sur l'une des faces (17) du boîtier (1), cette rotation étant en particulier limitée à environ 90°.

2. Minuterie thermostatique selon la revendication 1, caractérisée en ce que le cadran numérique (3) est monté et fixé de manière à pouvoir s'encliqueter dans l'une de ses positions de rotation.

3. Minuterie thermostatique selon les revendications 1 et 2, caractérisée en ce que la réserve de marche de la minuterie thermostatique est affichée sur le dispositif d'affichage (6).
